# EUROPÄISCHE PATENTSCHRIFT

(11) **EP 2 493 122 B1**
(45) Veröffentlichungstag und Bekanntmachung des Hinweises auf die Patenterteilung: **09.04.2014**
(21) Anmeldenummer: 11155553.8
(22) Anmeldetag: 23.02.2011
(51) Int. Cl.: H04L 12/28, H04L 12/751, H04L 12/721, H04L 29/12

(54) **IPv6 Quellenadressextrapolation**
IPv6 source address extrapolation
Extrapolation d'adresses sources IPv6

(43) Veröffentlichungstag der Anmeldung: 29.08.2012
(73) Patentinhaber: Deutsche Telekom AG, 53113 Bonn (DE)
(72) Erfinder: Simon, Holger, 10249, Berlin (DE); Jontofsohn, Walter, 10585, Berlin (DE); Bonneß, Olaf, 31535, Neustadt am Rbge. (DE); Kind, Mario, 10439, Berlin (DE)
(74) Vertreter: 2K Patentanwälte Blasberg Kewitz & Reichel

(56) Entgegenhaltungen:
- MARTIN DUNMORE ET AL: "Deliverable D4.5.3 Evaluation of Multihoming Solutions", 20040930, [Online] Nr. IST-2001-32603, 30. September 2004 (2004-09-30), XP007915758, Gefunden im Internet: URL:http://www.6net.org/publications/deliv erables/D4.5.3.pdf>
- DEC R JOHNSON CISCO SYSTEMS T MRUGALSKI GDANSK UNIVERSITY OF TECHNOLOGY A MATSUMOTO NTT PF LAB W: "DHCPv6 Route Options; draft-dec-dhcpv6-route-option-04.txt", DHCPV6 ROUTE OPTIONS; DRAFT-DEC-DHCPV6-ROUTE-OPTION-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, Nr. 4, 12. Juli 2010 (2010-07-12), Seiten 1-13, XP015069953, [gefunden am 2010-07-12]

## Beschreibung

Die Erfindung betrifft ein Verfahren zur Steuerung eines multi-homed Endkundennetzwerks mit einem Home Gateway, der über ein erstes Interface eine Verbindung zu einem Internetaccess Service Provider hat, der einen IPv6 Präfix an den Home Gateway und das Endkundenetzwerk propagiert, wobei das Endkundennetzwerk mindestens eine weitere Verbindung zu einem weiteren Dienste Netz über ein zweites Interface hat, die über einen Edge Router des Dienste Netz erfolgt.

### Gebiet der Erfindung

Der zunehmende Mangel von IPv4 (Internet Protokoll Adresse Version 4) bedingt den vermehrten Einsatz von IPv6 auch für Privatkunden / Endkunden. Darüber hinaus entwickeln sich aktuell auch verschiedene Formen der Kooperation von Dienste und Netzzugangsprovidern und es werden verschiedene Services (Internet, Voice, IPTV, ...) über unterschiedliche Produktionsplattformen bei verschiedenen Anbietern bereitgestellt. Für Endkunden können mehrere (logische / physische) WAN-Verbindungen existieren, die zum Teil über unterschiedliche Technologien produziert werden und bei verschiedenen Service Anbietern terminieren.

Aktuelle, vergleichbare Netzszenarien beruhen hauptsächlich auf dem Einsatz von IPv4 mit NAT. Das Residential Gateway setzt dabei die IPv4 Source Adresse im Endkundennetz (üblicherweise aus den in RFC1918 genannten Bereichen) je nach IPv4 Zieladresse entweder auf eine IPv4 Adresse aus dem Bereich des Internet Access Providers bzw. auf eine IPv4 Adresse(n) aus dem Bereich des / der zusätzlichen Serviceanbieter(s) um.

In diesen Szenarien stellt sich somit die beschriebene Problemstellung nicht, da der zusätzliche Serviceanbieter nur die WAN-seitige IPv4 Adresse des Residential Gateways sieht, welche er routingtechnisch problemlos auflösen kann.

Bei IPv6-adressierten Kundennetzen ist derzeit noch keine Lösung für das beschriebene Problem vorhanden oder standardisiert, mit Ausnahme eines technisch anders gelösten Ansatzes im Rahmen des Patentantrags EP2416531 A1 ("IPv6 Prefix announcement for routing-based Gateways in shared environments".

Die Erfindung findet seine Anwendbarkeit in Netzwerkszenarien, in denen ein Endkunde über unterschiedliche logische WAN Verbindungen (z.B. verschiedene VLANs, dedizierte Leitungen, unterschiedliche Zugangsmedien etc.) zu verschiedenen Serviceendpunkten (z.B. Internet Access Provider sowie ein bis mehrere Serviceanbieter oder mehrere Endpunkte zu verschiedenen Diensteplattformen des gleichen Serviceanbieters) verbunden ist. Die Erfindung behandelt den Fall das dieses "multi-homed" Kundennetz über einen eindeutigen global gültigen IPv6 Präfix verfügt, der vom Internet Access Provider zugeteilt wurde, aber dem zusätzlichen Serviceanbieter nicht im Vorhinein bekannt ist. Die Adressierung auf den verschiedenen WAN-Verbindungen ist jeweils serviceproviderspezifisch, spielt jedoch im Rahmen dieses Patentes keine Rolle.

Aus theoretischer Perspektive könnte eine automatisierte Lösung der Problemstellung über eine BSS/OSS-Schnittstelle zwischen den Providern (Internet Access Provider - zusätzliche(r) Serviceanbieter) realisiert werden, bedarf aber einer wesentlich komplexeren Implementierung und eines höheren Synchronisierungsaufwandes im Vergleich zur einfachen Anwendbarkeit des in diesem Patent beschriebenen Ansatzes.

Zur Verteilung im Kundennetz und zur Adressierung seiner Endsysteme wird einem Endkunden ein global gültiges IPv6 Präfix von seinem Internet Access Provider zugewiesen. Dieses IPv6 Präfix wird vom Internet Access Provider durch bestimmte technische Mittel (z.B. DHCPv6) an das Residential Gateway des Kunden übermittelt und von diesem an die Endgeräte im Kundennetz weiter verteilt. Alle Endsysteme des Endkunden werden somit mit IPv6 Adressen aus diesem Präfixbereich heraus ihre IP Kommunikation abwickeln.

Auch im Falle eines zusätzlichen Servicevertrages mit einem weiteren Anbieter werden für die Endgeräte im Kundennetz nur die Adressen aus dem Präfix des Internet Access Service Providers verwendet.

Für den Upstream-Verkehr aus dem Kundennetz heraus trifft das Residential Gateway des Kunden die Forwarding Entscheidung auf Basis eines zusätzlichen (more specific) Eintrags für die Verbindung zu den Dienstenetzen des zusätzlichen Serviceanbieters in der Forwardingtabelle. (Diese "more specific" Route wird dem Residential Gateway des Kunden durch den zusätzlichen Service Anbieter (z.B. vermittels der Techniken des RFC 4191) mitgeteilt.)

Jedoch muss der zusätzliche Serviceanbieter für den Downstream-Verkehr in Richtung Kundennetz ebenfalls über einen entsprechenden Forwarding-Eintrag bzgl. des im Kundennetz propagierten IPv6 Präfix verfügen. Die Druckschrift Martin Dunmore et al: "Deliverable D4.5.3 Evaluation of Mulihoming Solutions" 20040930 Nr IST-2001-32603, zeigt einen Ansatz, bei dem mehrere Edge-Router in einer Umgebung verbunden sind bzw. in einem Netzwerk mit dem Namen Site S. Diese Router sind wiederum über ein Netzwerk miteinander verbunden. Jeder dieser Router hat eine Verbindung zu einem Internetprovider. Es ist offensichtlich, dass diese Router getrennt voneinander angeordnet sind und nicht in einem Gerät, auch ist ersichtlich, dass diese Geräte Informationen über Routingprotokolle miteinander austauschen.

### Überblick über die Erfindung

Die Erfindung betrifft ein Verfahren nach Anspruch 1, und ein Dienstenetz nach Anspruch 6.

Das Einsatzszenario dieser Erfindung bezieht sich auf ein "multi-homed" Endkunden Netz, bei dem das Residential Gateway des Kunden über mehrere logische oder physische WAN Verbindungen mit unterschiedlichen Diensteanbietern (Internet Access Provider und ein/mehrere zusätzliche Serviceanbieter) verbunden ist.

Der Internet Access Service Provider vergibt an das Residential Gateway des Kunden einen IPv6 Präfix der ausschließlich im Endkundennetz verwendet wird, um die entsprechenden Systeme zu adressieren und eine IPv6 Kommunikation zu ermöglichten.

Da keiner der zusätzlichen Serviceanbieter die Informationen über diesen im Endkunden Netz verwendeten IPv6 Präfix besitzt, ergibt sich für jeden über eine zusätzliche WAN Verbindung angeschlossen zusätzlichen Serviceanbieter die Aufgabe, den im Endkundennetz verwendeten IPv6 Präfix zu "lernen".

Darüber hinaus sind zur Gewährleistung der Downstream Verbindungen vom zusätzlichen Serviceanbieter zu den

Endsystemen im Kundennetz auf dem Edge Router des jeweiligen zusätzlichen Service Anbieters die Voraussetzungen für das Forwarding zu schaffen, in dem ein entsprechender kundenbezogener Forwarding Eintrag erzeugt und ggf. im Netz des zusätzlichen Serviceanbieters propagiert wird.

Da nicht davon ausgegangen werden kann, dass eine permanente Kommunikation über die delegierten Kundenpräfixe zwischen dem Internet Access Provider und dem zusätzlichen Serviceanbieter existiert, ist zum "Erlernen" dieses vom Internet Access Provider delegierten IPv6 Kunden Präfix eine geeignete Methodik anzuwenden. Da in den meisten Fällen auf der Verbindung zwischen Kundennetz und dem zusätzlichen Serviceanbieter kein Routing-Protokoll zum Einsatz kommt, basiert diese Methodik für dieses beschriebene Patent auf einer Überwachung der Source Adressen der IPv6-Pakete der Endsysteme aus dem Kundennetz und einer nachfolgenden Extrapolation auf einen IPv6 Kundenprafixbereich.

Für dieses extrapolierte Kundenpräfix wird im Edge Router des zusätzlichen Serviceanbieters ein entsprechender Forwardingeintrag generiert und die zugehörige IPv6 Kundenroute wird durch den Edge Router auch innerhalb des internen Netzwerks des zusätzlichen Serviceanbieters propagiert.

Im oben beschriebenen Netzwerkszenario ("multi-homed" Kundennetz mit dedizierten logischen / physischen WAN Verbindungen zu unterschiedlichen Diensteanbietern) wird von einer 1:1 Zugangstechnologie ausgegangen, d.h. der zusätzliche Serviceprovider hat zu jedem Kunden eine dedizierte Verbindung, die auf dem Residential Router des Kunden und dem Edge Router des zusätzliche Serviceproviders mit jeweils einem logischen oder physischem Interface (z.B. Layer2 Sub-Interface) terminiert ist.

Zum Erlernen des IPv6 Kundenpräfix durch den / die zusätzlichen Serviceanbieter wird nun wie folgt verfahren: Ein Endsystem im Kundennetz will den Dienst des zusätzlichen Serviceanbieters in Anspruch nehmen und sendet ein entsprechendes IPv6 Paket in Richtung Dienstenetz des zusätzlichen Serviceanbieters. Das Residential Gateway verfügt (neben seiner "default" Route zum Internet Access Provider) über einen zusätzlichen (spezifischeren) Forwardingeintrag zum zusätzlichen Serviceanbieter der auf das entsprechende (Layer 2) Interface verweist. Über dieses wird das IPv6 Paket des Endsystems weitergeleitet in Richtung zusätzlicher Serviceanbieter.

(Diese spezifischere Route kann dem Residential Gateway des Kunden im Vornherein durch z.B. die Techniken aus RFC4191 mitgeteilt werden, was jedoch nicht Erfindungs-beeinflussend ist.)

Der Edge Router des zusätzlichen Serviceanbieters empfängt über die dedizierte WAN (z.B. Layer2 des OSI-Schichtenmodells) Verbindung das IPv6 Paket des Kunden auf einem (Layer2 Sub-) Interface. Die IPv6 Source Adresse des Paketes ist dabei die IPv6 Adresse des Endgerätes im Kundennetz.

Aus dieser beobachteten IPv6 Source Adresse des Kundenpaketes wird auf den möglichen IPv6 Präfix des Kunden extrapoliert, der diesem von seinem Internet Access Provider mitgeteilt wurden ist. Darüber hinaus wird der extrapolierte IPv6 Kundenpräfix in die Forwarding Tabelle des Edge Routers des zusätzlichen Serviceanbieters eingepflegt, so dass Downstream die Antwortpakete das richtige (Layer2 Sub-) Interface zum Endkunden benutzen können.

(Der entsprechende Edge Router propagiert darüber hinaus auch den gelernten IPv6 Kundenpräfix innerhalb des internen Netzes des zusätzlichen Serviceanbieters.)

Eine Extrapolation eines IPv6 Kundenpräfix aus einer beobachteten IPv6 Source Adresse geschieht folgenderweise:
- Üblicherweise wird im Kundennetz IPv6 mindestens ein /64 IPv6 Präfix (64 Bit der Adresse sind fester Netzanteil) verwendet, daher kann man von der IPv6 Source Adresse einfach auf den im Kundennetz verwendeten IPv6 Präfixbereich schließen.
- Beobachtet man zu einem späteren Zeitpurikt IPv6 Source Adressen auf dieser Kundenleitung, die außerhalb des zuerst extrapolierten /64 Präfixbereich liegen, so sind basierend auf eine zu konfigurierende Policy, folgende Möglichkeiten zulässig:
   ○ Zuordnen eines weiteren /64 Präfix zu diesem Kundenanschluss (inklusive Eintrag in die Forwärding Tabelle des Edge Routers und Propagieren im internen Netz des zusätzlichen Serviceanbieters).
   ○ Extrapolation aus dem / den vorherigen /64 Präfix(en) und der neu beobachteten IPv6 Source Adresse auf einen kürzeren IPv6 Kundenpräfix (konfigurierbar, z.B. /48, /52, /56 etc.) (inklusive wieder Eintragen und Propagieren desselben).

Zum Schutz vor fälschlichen Eintragungen und DoS Attacken auf das in diesem Patent beschriebene Verfahren (Antispoofingschutz) können bzgl. der Eintragung von IPv6 Kundenpräfixen in der Forwarding Tabelle des Edge Router eines zusätzlichen Serviceanbieters und dem Propagieren dieser Einträge verschiedene zusätzliche Policies angewendet werden:
- Zulassen nur eines (des ersten)Präfixes auf einem dedizierten (Sub-) Interface zu einem Kunden mit jeweils konfigurierbare Fräfixlänge (64 Bit und kürzer).
- Prüfen der Aggregierbarkeit der beobachteten IPv6 Source Adressen in ein übergreifendes zu konfigurierendes Präfixaggregat mit einer kürzeren Länge als 64 Bit. Ein Provider nutzt zum Beispiel für Kundenallokationen folgende Adressbereich 2001:db8::/48. Wenn die beobachtete IPv6 Source Adressen sich nicht innerhalb dieses Netzes befinden, werden diese verworfen. Falls sich die Source Adresse innerhalb dieses Netzes befinden, wird die Adresse in die Forwarding Table übertragen.
- (Offline- oder Backend) Prüfung mit dem Internet Access Provider, ob die IPv6 Source Adresse (und der extrapolierte IPv6 Kundenpräfix) zu einem (dem) delegierten IPv6 Präfix des entsprechenden Kunden passt

Die Erfindung hat für alle beteiligten Rollen (Endkunde, Internetaccess Service Provider, zusätzlicher Service Anbieter) verschiedene Vorteile in der Gestaltung der operativen Prozesse, für die Verteilung von IPv6 relevanten Informationen zur Entscheidung über Forwarding-Einträge. Der in diesem Patent vorgeschlagene Mechanismus fördert die Unabhängigkeit zwischen den unterschiedlichen Rollen und verhindert somit die explizite Integration zusätzlicher Mechanismen (z.B. Out-of-band Kommunikation zwischen Internet Access Provider und zusätzlichem Serviceanbieter über den dem Endkunden zugeteilten IPv6 Präfix).

Aus Endkundensicht ergibt sich eine Vereinfachung der Konfiguration des Residential Gateway (RG). Grundsätzlich ist es einem Endkunden eher nicht zuzumuten IP-Konfigurationen in seinen Endgeräten durchzuführen. Daher sollte es vermieden werden, Mechanismen mit benötigter Kundeninteraktion zu entwickeln bzw. einzusetzen. Dies wäre der Fall, wenn Kunden, die Verbindungen mit mehreren Dienstpro-cridern bzw. -plattformen aufbauen, auf heutigen Mechanismen zurückgreifen müssen.

Durch die Verwendung eines IPv6-Präfix zur Konfiguration des Residential Gateway und des Endkundennetzes finden keine weiteren Kundeninteraktion statt, aber die Konfiguration des zusätzlichen Dienstanbieters stellt das Netzmanagement vor zusätzliche Probleme. Der in diesem Patent beschriebene Mechanismus reduziert diesen Aufwand auf die Dienstplattform des Providers, weg vom Kunden.

Der in dieser Erfindung beschriebene Mechanismus zeichnet sich durch die Verlagerung aller notwendigen Konfigurationen des Residential Gateways des Endkunden in den Edge Router des zusätzlichen Dienstproviders und der damit einhergehenden Reduzierung von providerübergreifenden Prozessen aus. Providerübergreifende Prozesse stellen immer eine zusätzliche Komplexität im Netzmanagement dar und sollten daher weitestgehend vermieden werden. Durch das Extrapolieren der möglichen Forwarding-Einträge kann hier eine sehr einfache Lösung Abhilfe bringen.

Es ist somit eine Vereinfachung der Providerseite in multi-homed Kundenszenarien gegeben. Daher bilden die Provider IP-basierter Dienste und Dienstplattformen die primäre, potentielle Zielgruppe Provider für dieses Patent. Diese finden sich unter anderem aber nicht ausschließlich, in zukünftigen Kooperationsszenarien im Bereich des "open Access".

Die Implementierung der Mechanismen dieser Erfindung erfolgt in den Edge Routern der Serviceanbieter; daher wird die sekundäre Zielgruppe durch die Hersteller von Routern bzw. - chipsätzen und entsprechender Router Software gebildet.

Da in Zukunft Kooperationen im Bereich des "Open Access" / eine zunehmende Bedeutung haben werden, wird es nötig sein, dass Provider miteinander zusammenarbeiten, zumindest was die notwendige Konfiguration von IPv6 Forwarding-Einträgen betrifft. Die hier vorgestellte Methode entkoppelt diese Abhängigkeit und ermöglicht die schnellere Konfiguration und Realisierung von Produkten Kooperationsprodukten ohne das Erfordernis zusätzliche B2B Interfaces zwischen den Service Providern zu schaffen und instanziieren.

Die Vorteile für den Provider sind einerseits die Möglichkeit, keinen zusätzlichen Prozess für den Austausch von IPv6-Adressen / Endkunden Präfixen als Internet Service Provider zu etablieren und andererseits in keine Abhängigkeit von anderen Providern in Kooperationsszenarien zu gelangen.

### Beschreibung der Figur

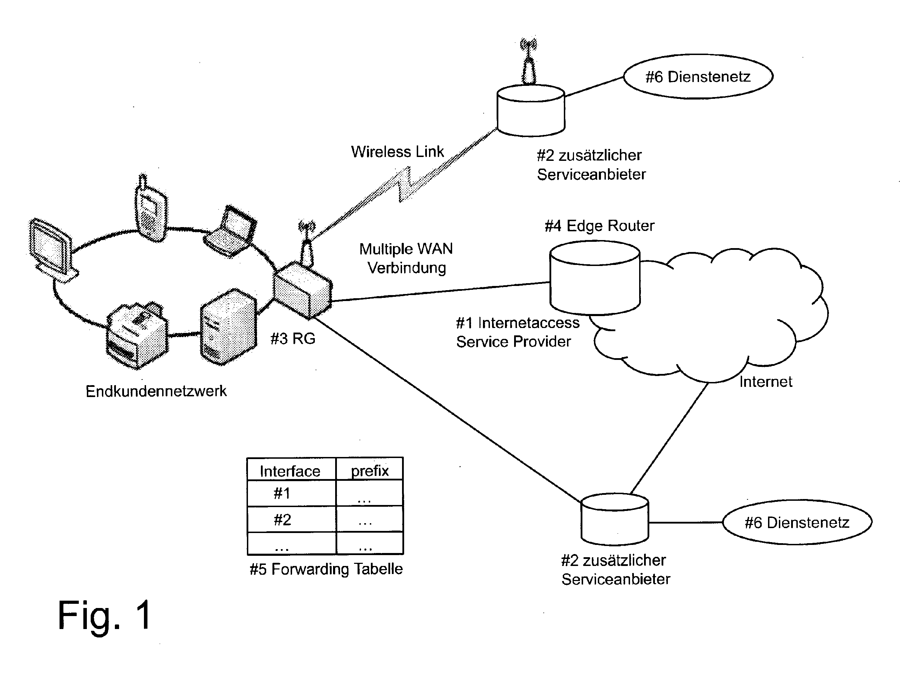

Die Fig. 1 zeit den "Internet Access Provider" #1, der der bevorzugte Zugangsanbieter des entsprechenden Kunden mit seinem Customer Network/Endkundennetzwerks ist. Der Internet Access Provider verfügt in der Regel über die stärkste Kundenbeziehung, ist für die Zuweisung von IPv6 Adressen für den Kunden und dessen Netzwerk zuständig und stellt in den meisten Fällen auch den physischen Netzzugang (z.B. via DSL) bereit.

Weiterhin zeigt Fig. 1 einen "zusätzlicher Service Anbieter" bzw. Diensteanbieter, der dem entsprechenden Kunden einen weiteren Dienst (z.B. IP-TV) zur Verfügung stellt, ohne jedoch notwendigerweise dem Kunden eigene IP Adressen zuzuweisen. Dies ist auch nicht notwendig, da bereits Adressen durch den Access Provider vergeben wurden. Im Normalfall besteht eine Vertragsbeziehung zwischen dem Internet Access Provider und dem zusätzlichen Service Provider, welche es dem zusätzlichen Service Provider erlaubt den Netzzugang des Internet Access Providers zum Kunden zu nutzen (z.B. Bit Stream ACCess).

Es wird vorausgesetzt, dass der Internet Access Provider und zusätzlicher Service Anbieter jeweils unterscheidbare 1:1 Verbindungen (z.B. VLANs) zum Kunden besitzen. Diese Verbindungen werden in Fig. 1 durch #2 dargestellt. In der Fig. 1 sind zwei Dienstenetzwerke dargestellt. Es ist natürlich auch möglich, dass mehr als diese beiden gegeben sind.

Das Residential Gateway (RG) #3 (oder auch Home Gateway) ist ein Router auf Kundenseite, der das Kundennetz mit dem physikalischen Internetzugang des Internet Access Providers (z.B. DSL Verbindung) verbindet. Er trifft die Weiterleitungsentscheidung (Forwarding) bzgl. des Kundenverkehrs in Richtung Internet Access Provider bzw. zusätzlichen Service Provider und ist dafür zuständig, den vom Internet Access Provider zugewiesenen IPv6 Präfix im Netzwerk des Kunden zu propagieren.

Der Edge Router #4 ist der Zugangsrouter des Internet Access Providers und der zusätzlichen Serviceanbieters und somit der erste IPv6 Hop aus Kundensicht. Die Fig. 1 zeigt 3 Edge Router.

Der Downstream Verkehr bezeichnet diejenigen IPv6 Pakete, die aus Richtung Internet Access Provider bzw. zusätzlichen Serviceanbieter zum Residential Gateway / Kundennetzwerk gesendet werden.

Der Upstream Verkehr bezeichnet diejenigen IPv6 Pakete, die aus Richtung Residential Gateway / Kundennetzwerk zum Internet Access Provider bzw. zusätzlichen Serviceanbieter gesendet werden.

Die Forwarding Tabelle #5 enthält Einträge (z.B. IPv6 Adressen oder Präfixe), die es ermöglichen, eine Entscheidung zu treffen, über welches des verfügbaren logischen/ physischen Interfaces eines Routers / Gateways ein IPv6 Paket weiterzuleiten ist. Da im Rahmen dieser Erfindung die Forwarding Tabelle nicht auf Basis eines Routingverfahrens sondern durch "Erlernen" eines IPv6 Präfix gefüllt wird, wird der Begriff Forwarding Tabelle verwendet.

Das Dienstenetz #6 Ist der Netzbereich, in dem der zusätzliche Serviceanbieter seine Dienste für die Nutzung durch den Endkunden bereitstellt.

Open Access ist eine Kooperationsvereinbarung zwischen verschiedenen Service Providern, die auf Diskrimierungsfreiheit und gleichberechtigten Netzzugang des entsprechenden Endkunden abzielt.

Das Residential Gateway kennt die Verbindung über eine zusätzliche Route und ist in der Lage, den Verkehr zum Router des zusätzlichen Serviceanbieters zu senden. Der Edge Router des zusätzlichen Serviceanbieters empfängt dieses Paket und pflegt seine Forwardinginformationen durch das Lesen der Source Adresse des eingehenden Paketes.

Eine vereinfachte Illustration der zugrunde gelegten Architektur ist Fig. 1 zu entnehmen. Die Erfindung erfordert vorzugsweise eine Modifikation / Änderung im jeweiligen Edge Router der zusätzlichen Serviceanbieter (IPv6 Source Adress Snooping / IPv6 Präfix Extrapolation / Eintragen in die Forwardingtabelle / Propagieren des IPv6 Kundenpräfix) und ist für den Endkunden in dieser Hinsicht transparent. Der Edge Router weist eine Datenverkehrsanalyseeinheit auf, die ausgebildet ist, um IPv6 Pakete aus dem Endkundennetzwerk zu analysieren, um den möglichen IPv6 Präfix des Endkundennetzwerks durch Extrapolation zu bestimnen. Die Datenverkehrsanalyseeinheit ist ausgebildet als Recheneinheit und wird in der Regel von der integrierten CPU durch Software implementiert.

Eine weitere Komponente ist die Speichereinheit, auf der der IPv6 Präfix in die Forwarding-Tabelle des Edge Routers eintragen wird, so dass die Antwortpakte vom Dienstenetz über downstream Interface des zusätzlichen Serviceanbieters zum Kunden transportiert werden können. Die Speichereinheit ist als Arbeitsspeicher oder dauerhafter Speicher ausgebildet.

Das Residential Gateway des Endkunden sollte jedoch in der Lage sein, das skizzierte multi-homed Netzwerkszenario mit verschiedenen Netzzugangsanbietern und zusätzlichen Serviceanbietern umzusetzen und entsprechend spezielle Forwarding Einträge (z.B. via DHCPv6 von den zusätzlichen Service Anbietern verteilt) vorzuhalten und umzusetzen.

Eine wesentlicher Ansatz der Erfindung beruht auf dem Erlernen des vom Internet Access Provider an den Kunden delegierten und durch das Home Gateway in das Kundennetz propagierten IPv6 Präfix, in dem der oder die Edge Router der/des zusätzlichen Serviceanbieter(s) die vom Kunden empfangenen IPv6 Pakete bzgl. deren IPv6 Source Adresse untersucht, aus diesen IPv6 Adressen Rückschlüsse auf den delegierten IPv6 Kundenpräfix macht und entsprechende Forwarding Einträge für den Downstream Verkehr in Richtung Kundennetz in seinem / seinen Edge Router(n) veranlasst. Darüber hinaus wird der jeweilige Edge Router die gelernten IPv6 Kundenpräfixe mittels eines Routing Protokolls in dem internen Netz des zusätzlichen Serviceanbieters propagieren. Ein Rückfolgern auf den IPv6 Kundenpräfix aus der beobachteten IPv6 Source Adresse eines IPv6 Pakets heraus erfolgt derart, dass der beobachteten IPv6 Source Adresse zunächst das sie umfassende /64 Präfix zugeordnet wird. (In den meisten Fällen ist dies bereits hinreichend, da die heutigen Residential Gateways / Home Gateways nur einen /64 des ihnen vom Internet Access Provider zugewiesenen Kundennetzpräfix (meist ein /56 bzw. /48) im Kundennetz propagieren.)

Beobachtet der Edge Router des zusätzlichen Serviceanbieters zu einem späteren Zeitpunkt IPv6 Pakete mit Source Adressen außerhalb des initial identifizierten /64 IPv6 Präfixbereiches, so kann er auf Basis einer vorher zu konfigurierenden Policy folgende Entscheidungen treffen:
(1) Identifikation und Eintragen eines weiteren dem Kundenanschluss zuzuordnenden /64 Präfix in die Forward Tabelle des Edge Routers (und Propagieren im internen Netz des zusätzlichen Serviceanbieters). Dabei sollte die maximale Anzahl der akzeptierbaren /64 Präfixe für einen Kunden konfigurierbar sein.
(2) Extrapolation aus dem / den vorherigen /64 Präfix(en) und der neu beobachteten IPv6 Source Adresse auf einen kürzeren IPv6 Kundenpräfix (konfigurierbar, z.B. /48, /52, /56 etc.) inklusive Eintragen desselben in die Forwarding Tabelle des Edge Routers und Propagieren internen Netzwerk des zusätzlichen Service Anbieters.
(3) Einordnen dieser IPv6 Adresse als "gespooft" und Verwerfen des Paketes, wenn die IPv6 Adresse außerhalb des konfigurierten Präfixbereiches (z.B. /64, /56, /52 oder /48) der zuerst beobachteten IPv6 Source Adresse liegt.

### Literatur

- RFC1918:: Rekhter, Y. et al.: Address Allocation for Private Internets. Februar 1996
- RFC4191:: Draves, R., Thaler, D.: Default Router Preferences and more-Specific Routes. November 2005

EP Anmeldung mit dem Aktenzeichen 10171828.6 - 1525:

## Patentansprüche

1. Verfahren zur Steuerung eines multi-homed Endkundennetzwerks mit einem Home Gateway (#3), der über ein erstes Interface eine Verbindung zu einem Internetaccess Service Provider (#1) hat, welcher einen IPv6 Präfix an den Home Gateway (#3) des Endkundennetzwerkes propagiert, das Home Gateway des Endkundennetzwerkes mindestens eine weitere Verbindung zu einem weiteren Dienstenetz (#6) über ein zweites Interface hat, die über einen Edge Router des Dienstenetzes (#2) erfolgt, das Verfahren umfasst die Schritte:
- Analysieren der IPv6 Pakete aus dem Endkundenetzwerk durch den Edge Router (#2);
- Bestimmen des möglichen IPv6 Präfix des Endkundennetzwerks, durch Extrapolation, durch den Edge Router (#2);
- Eintragen des IPv6 Präfixes in die Forwardingtabelle des Edge Routers, so dass die Antwortpakte vom Dienstenetz über das zweite Interface transportiert werden.

2. Das Verfahren nach dem vorhergehenden Anspruch, wobei der entsprechende Edge Router darüber hinaus den gelernten IPv6 Kundenpräfix innerhalb des Netzes des Dienstenetz (#6) des Serviceanbieters propagiert.

3. Das Verfahren nach einem oder mehreren der vorhergehenden Ansprüche, wobei die Extrapolation eines IPv6 Kundenpräfix aus einer beobachteten IPv6 Source Adresse des IPv6 Paketes wie folgt durchgeführt wird:
Annahme, dass im Endkundenetzwerk mindestens ein /64 IPv6 Präfix, verwendet wird, wobei 64 Bit der Adresse fester Netzanteil sind, wodurch von einer IPv6 Source Adresse des Pakets auf den im Endkundennetz verwendeten IPv6 Präfixbereich zu schließen ist.

4. Das Verfahren nach dem vorhergehenden Anspruch, wobei die IPv6 Pakete weiter beobachtet werden, und falls zu einem Zeitpunkt IPv6 Source Adressen aus dem Endkundennetzwerk analysiert werden, die außerhalb des zuerst extrapolierten /64 Präfixbereich liegen, so sind basierend auf einer zu konfigurierende Police, eine oder mehrere der folgende Schritte durchzuführen:
a. Zuordnen eines weiteren /64 Präfix zu diesem Kundenanschluss, was ebenfalls einen Einfluss auf die Einträge in den Forwarding Tabelle des Edge Routers und des Propagieren im internen Netz des zusätzlichen Serviceanbieters haben kann.
b. Extrapolation aus dem / den vorherigen /64 Präfix(en) und der neu beobachteten IPv6 Source Adresse auf einen kürzeren IPv6 Kundenpräfix, die vorzugsweise als /48, /52, /56 ausgebildet sind, und was ebenfalls einen Einfluss auf die Einträge in den Forwarding Tabelle des Edge Routers und des Propagieren im internen Netz des zusätzlichen Serviceanbieters haben kann.

5. Das Verfahren nach einem oder mehreren der vorhergehenden Ansprüche, wobei zum Schutz vor fälschlichen Eintragungen und DoS Attacken eine oder mehrere der folgenden Regeln überprüft wird:
a.) Zulassen nur eines Präfixes auf einem dedizierten Interface zu einem Endkundennetzwerk mit jeweils konfigurierbare Präfixlänge, vorzugsweise 64 Bit;
b.)Prüfen der Aggregierbarkeit der beobachteten IPv6 Source Adressen in ein übergreifendes zu konfigurierendes Präfixaggregat mit einer kürzeren Länge als 64 Bit.
c.) Prüfung mit dem Internet Access Provider durch den Diensteanbieter, ob die IPv6 Source Adresse und der extrapolierte IPv6 Kundenpräfix zu einem delegierten IPv6 Präfix des entsprechenden Kunden passt.

6. Dienstenetz (#6), das einen Edge Router (#2) und weitere Komponenten umfasst, das über den Edge Router (#2) mit einem multi-homed Endkundennetzwerks über ein zweites Interface des Endkundennetzwerkes verbunden ist, wobei das Endkundennetzwerk über ein erstes Interface mindestens eine Verbindung zu einem Internetaccess Service Provider (#1) hat, der einen IPv6 Präfix an den Home Gateway (#3) und das Endkundenetzwerk propagiert hat, umfassend die Komponenten:
- Datenverkehrsanalyseeinheit, die vorzugsweise im Edge Router (#2) ausgebildet ist, die ausgebildet ist, um IPv6 Pakete aus dem Endkundennetzwerk zu analysieren,
um den möglichen IPv6 Präfix des Endkundennetzwerks durch Extrapolation zu bestimmen,
- Speichereinheit, auf der der IPv6 Präfix in die Forwarding-Tabelle des Edge Routers eingetragen wird,
so dass die Antwortpakte vom Dienstenetz über das downstream Interface zum Kunden transportiert werden können.

7. Dienstenetz nach dem vorhergehenden Anspruch, wobei der entsprechende Edge Router eingerichtet ist, um den gelernten IPv6 Kundenpräfix innerhalb des Dienstenetzes (#6) zu propagieren.

8. Dienstenetz nach einem oder mehreren der vorhergehenden Dienstenetzansprüche, wobei die Datenverkehrsanalyseeinheit so eingerichtet ist, dass die Extrapolation eines IPv6 Kundenpräfix aus einer beobachteten IPv6 Source Adresse des IPv6 Paketes wie folgt durchführbar ist:
Annahme, dass im Endkundenetzwerk mindestens ein /64 IPv6 Präfix, verwendet wird, wobei 64 Bit der Adresse fester Netzanteil sind, wodurch von einer IPv6 Source Adresse des Pakets auf den im Endkundennetz verwendeten IPv6 Präfixbereich zu schließen ist.

9. Dienstenetz nach dem vorhergehenden Anspruch, wobei die Datenverkehrsanalyseeinheit so eingerichtet ist, dass die IPv6 Pakete weiter beobachtbar sind, und falls zu einem Zeitpunkt IPv6 Source Adressen aus dem Endkundennetzwerk analysiert werden, die außerhalb des zuerst extrapolierten /64 Präfixbereich liegen, so sind basierend auf einer zu konfigurierende Police, eine oder mehrere der folgende Schritte durchzuführen:
a. Zuordnen eines weiteren /64 Präfix zu diesem Kundenanschluss, was ebenfalls einen Einfluss auf die Einträge in den Forwarding Tabelle des Edge Routers und das Propagieren im internen Netz des zusätzlichen Serviceanbieters haben kann.
b. Extrapolation aus dem / den vorherigen /64 Präfix(en) und der neu beobachteten IPv6 Source Adresse auf einen kürzeren IPv6 Kundenpräfix, die vorzugsweise als /48, /52, /56 ausgebildet sind, und was ebenfalls einen Einfluss auf die Einträge in den Forwarding Tabelle des Edge Routers und das Propagieren im internen Netz des zusätzlichen Serviceanbieters haben kann.

10. Dienstenetz nach einem oder mehreren der
vorhergehenden Dienstenetzansprüche, wobei Mittel vorhanden sind, zum Schutz vor fälschlichen Eintragungen und DoS Attacken, indem eine oder mehrere der folgenden Regeln überprüft werden:
a.) Zulassen nur eines Präfixes auf einem dedizierten Interface zu einem Endkundennetzwerk mit jeweils konfigurierbare Präfixlänge, vorzugsweise 64 Bit;
b.)Prüfen der Aggregierbarkeit der beobachteten IPv6 Source Adressen in ein übergreifendes zu konfigurierendes Präfixaggregat mit einer kürzeren Länge als 64 Bit.
c.) Prüfung mit dem Internet Access Provider durch den Diensteanbieter, ob die IPv6 Source Adresse und der extrapolierte IPv6 Kundenpräfix zu einem delegierten IPv6 Präfix des entsprechenden Kunden passt.

## Claims

1. A method for controlling a multi-homed end user network with a home gateway (# 3) having via a first interface a connection to an Internet Access Service Provider (#1), which propagates an IPv6 prefix to the home gateway (# 3) of the end user network, the home gateway of the end user network has at least one further connection to another service network (#6) via a second interface, which is carried out via an edge router of the service network (#2), the method comprising the steps of:
- analyzing the IPv6 packets from the end user network by the edge router (# 2) ;
- determining the possible IPv6 prefix of the end user network, by the edge router (# 2) through extrapolation;
- entering the IPv6 prefix into the forwarding table of the edge router, so that the response packets can be transported from the service network via the second interface .

2. Method according to the preceding claim, wherein the respective edge router furthermore propagates the learned IPv6 end user prefix within the service network (# 6) of the service provider.

3. Method according to one or more of the preceding claims, wherein the extrapolation of an IPv6 end user prefix from an watched IPv6 source address of the IPv6 packet is performed as follows:
Assuming that at least one /64 IPv6 prefix is used in the end user network, wherein 64 bits of the address are a fixed network part , wherein it can be concluded from an IPv6 source address of the packet to the IPv6 prefix segment used in the end user network.

4. The method according to the preceding claim, wherein the IPv6 packets are continued to be monitored and if at any time IPv6 source addresses of the end user network are analyzed , which are outside of the first extrapolated /64 prefix segment, then, based on a policy which is to be configured, one or more of the following steps are to be performed:
a. Allocating of another /64 prefix for this end user connection, which can also have an impact on the entries in the forwarding table of the edge router and propagating In the internal network of the additional service network;
b. Extrapolation from the previous /64 prefix/es and the newly observed IPv6 source address to a shorter IPv6 end user prefix, which is/are preferably configured as, / 48 / 52 /56, and which can also have an impact on the entries in the forwarding table of the edge router and on the propagating in the internal network of the additional service network.

5. Method according to one or more of the preceding claims, wherein for protection against erroneous entries and DoS attacks one or more of the following rules is verified:
a.) Allowing only one prefix on a dedicated interface to an end user network with configurable prefix length respectively , preferably 64 bit;
b.) Checking the aggregationability of the observed IPv6 source addresses in a comprehensive prefix aggregate which is to be configured with a shorter length than 64 bits;
c.) Checking with the internet access provider through the service provider if the IPv6 source address and the extrapolated IPv6 end user prefix match with a delegated IPv6 prefix of the corresponding end users.

6. Service network (# 6), comprising one edge router (# 2) and further components, which is connected to a multi-homed end user network via a second interface of the end user network , wherein the end users network has at least one connection to an Internet access service provider (# 1) via a first interface, that has propagated one IPv6 prefix of the home gateway (# 3) and the end user network comprising the components:
- Data traffic analysis unit, which is preferably formed in the edge router (# 2) , which is designed to analyze IPv6 packets from the end user network , to determine the possible IPv6 prefix of the end user network by extrapolation.
- Memory unit, in which the IPv6 prefix is entered In the forwarding table of the edge router, such that the response packets can be transported from the service network via the downstream interface for the end user.

7. Service network according to the preceding claim, wherein the corresponding edge router is adapted to propagate the learned IPv6 end user prefix within the service network (# 6),

8. Service network according to one or more of the preceding service network claims, wherein the data traffic analysis unit is arranged in such way that the extrapolation of a IPv6 end user prefix from an observed IPv6 source address of the IPv6 packet is carried out as follows:
Assuming that at least one /64 IPv6 prefix is used In the end user network, wherein 64 bits of the address are a fixed network part , wherein it can be concluded from an IPv6 source address of the packet to the IPv6 prefix segment used in the end user network.

9. Service network according to the preceding claim, wherein the data traffic analysis unit is configured in such a way that the IPv6 packets are further observed, and if at any time IPv6 source addresses of the end user network are analyzed , which are outside of the first extrapolated /64 prefix segment, then, based on a policy which is to be configured, one or more of the following steps are to be performed:
a. Allocating of another /64 prefix for this end user connection, which can also have an Impact on the entries in the forwarding table of the edge router and propagating in the internal network of the additional service network;
b. Extrapolation from the previous /64 prefix/es and the newly observed IPv6 source address to a shorter IPv6 end user prefix, which is/are preferably configured as, /48/52/56, and which can also have an Impact on the entries in the forwarding table of the edge router and on the propagating in the internal network of the additional service network.

10. Service network according to one or more of the preceding service network claims, wherein means are provided for protection against erroneous entries and DoS attacks, by verifying one or more of the following rules:
a.) Allowing only one prefix on a dedicated Interface to an end user network with configurable prefix length respectively , preferably 64 bit;
b.) Checking the aggregationability of the observed IPv6 source addresses in a comprehensive prefix aggregate which is to be configured with a shorter length than 64 bits;
c.) Checking with the internet access provider through the service provider if the IPv6 source address and the extrapolated IPv6 end user prefix match with a delegated IPv6 prefix of the corresponding end users.

## Revendications

1. Une méthode de commande d'un réseau d'un utilisateur final multi-résidentiel avec une passerelle résidentielle (#3) ayant une connexion à un Fournisseur d'Accès à un Réseau Internet (# 1) via une première interface, laquelle propage un préfix IPv6 vers la passerelle résidentielle (#3) du réseau de l'utilisateur final, la passerelle résidentielle du réseau de l'utilisateur final ayant au moins une connexion supplémentaire à un autre réseau de service (#6) via une seconde interface, qui est mise en oeuvre vis un routeur périphérique du réseau de service (#2) , la méthode comprenant les étapes :
- l'analyse des paquets Ipv6 venant du réseau de l'utilisateur final au moyen du routeur périphérique (#2) ;
- la détermination par le routeur périphérique (#2) du préfixe Ipv6 potentiel du réseau de l'utilisateur final au moyen d'une extrapolation ;
- la saisie du préfixe IPv6 au sein d'une table de suivi du routeur périphérique, de telle manière que les paquets de réponse peuvent être transportés depuis le réseau de service via la seconde interface.

2. La méthode selon la revendication précédente, dans laquelle le routeur périphérique respectif propage le préfixe appris Ipv6 de l'utilisateur final au sein du réseau de service (#6) du fournisseur de service.

3. La méthode selon l'une ou plusieurs des revendications précédentes, dans laquelle l'extrapolation d'un préfixe d'utilisateur final IPv6 depuis une adresse source IPv6 observée du paquet IPv6 est réalisée comme suit :
l'hypothèse qu'au moins un préfixe IPv6 /64 est utilisé au sein du réseau de l'utilisateur final, dans lequel 64 bits de l'adresse sont une partie de réseau fixe, dans lequel l'on peut conclure d'une adresse source IPv6 du paquet le segment de préfixe IPv6 utilisé dans le réseau de l'utilisateur final.

4. La méthode selon la revendication précédente, dans laquelle les paquets IPv6 sont continuellement suivis et dans laquelle l'on effectue, sur la base d'une politique à déterminer, l'une ou plusieurs des étapes suivantes lorsque des adresses sources IPv6 du réseau de l'utilisateur final sont hors du premier segment de préfixe /64 extrapolé :
a) l'allocation d'un autre préfixe /64 pour la connexion de cet utilisateur final, lequel peut également avoir un impact sur les entrées de la table de suivi du routeur périphérique et sur la propagation au sein du réseau interne du réseau de service additionnel ;
b) l'extrapolation à partir des préfixes /64 antérieurs et des adresses de source IPv6 nouvellement observées, pour un préfix d'utilisateur final IPv6 plus court, de préférence configurées en tant que /48 /52 /56, et qui peuvent également avoir un impact sur les entrées de la table de suivi du routeur périphérique et sur la propagation au sein du réseau interne du réseau de service additionnel.

5. La méthode selon l'une ou plusieurs des revendications précédentes, dans laquelle une ou plusieurs des règles suivantes est appliquée pour un but de protection à l'encontre d'entrées erronées et des attaques DoS :
a) permettre uniquement une seul préfixe sur une interface dédiée d'un réseau d'utilisateur final avec une longueur de préfixe configurable, de préférence 64 bits ;
b) le test de la possibilité d'agréger les adresses de source IP6 observées au sein d'un agrégat de préfixe complet devant être configuré avec une longueur inférieure à 64 bits ;
c) le test auprès du fournisseur d'accès internet via le fournisseur de service que l'adresse de source Ipv6 et le préfixe de l'utilisateur final IPv6 extrapolé correspondent avec un préfixe IPv6 délégué des utilisateurs finaux correspondants.

6. Réseau de service (#6), comprenant un routeur périphérique (#2) et des composants supplémentaires, qui est connecté à un réseau d'utilisateur final multi-résidentiel via une seconde interface du réseau de l'utilisateur final, dans lequel le réseau de l'utilisateur final dispose d'au moins une connexion à un fournisseur d'accès Internet (#1) via une première interface, lequel a propagé un préfixe IPv6 de la passerelle résidentielle (#3) et le réseau de l'utilisateur final comporte les composants :
- une unité d'analyse de trafic de données, qui est de préférence include au sein du routeur périphérique (#2) , conçue pour analyser les paquets IPv6 émanant du réseau de l'utilisateur final, pour déterminer par extrapolation le préfixe potentiel IPv6 du réseau de l'utilisateur final,
- une unité de mémoire, dans laquelle le préfixe IPv6 est stockée au sein d'une table de suivi du routeur périphérique, de telle manière que les paquets de réponse peuvent être transportés depuis le réseau de service via l'interface descendante pour l'utilisateur final.

7. Réseau de service selon la revendication précédente, dans lequel le routeur périphérique correspondant est adapté à la propagation du préfixe de l'utilisateur final IPv6 appris au sein du réseau de service (#6).

8. Réseau de service selon l'une ou plusieurs des revendications précédentes de réseau de service , dans lequel l'analyse du traffic de données est conçue de telle manière que l'extrapolation d'un préfixe d'utilisateur final IPv6 à partir d'une adresse de source IPv6 du paquet IPv6 est effectuée comme suit :
avec l'hypothèse qu'au moins un préfixe /64 est utilisé au sein du réseau de l'utilisateur final, dans lequel 46 bits de l'adresse correspond à une partie de réseau fixe, dans laquelle on peut conclure du segment de préfixe IPv6 utilisé au sein du réseau de l'utilisateur final à partir d'une adresse de source IPv6 .

9. Réseau de service selon la revendication précédente, dans lequel l'analyse de trafic de données est configurée de telle manière à poursuivre l'observations de paquets IPv6 , et que dès lors que l'analyse des adresses sources du réseau de l'utilisateur final apparaissent hors du segment de préfixe /64 extrapolé, alors, sur la base d'une politique à configurer, une ou plusieurs des étapes suivantes sont effectuées :
a) l'allocation d'un autre préfixe /64 pour la connexion de cet utilisateur final, ce qui peut également avoir un effet sur la table de suivi du routeur périphérique ainsi que la propagation au sein du réseau interne du réseau de service additionnel ;
b) l'extrapolation à partir du ou des préfixes /64 et de l'adresse source IPv6 nouvellement observée pour un nouveau préfixe d'utilisateur terminal IPv6 plus court, de préférence configuré en tant que /48 /52 /56, et qui peut également avoir un effet sur les entrées de la table de suivi du routeur périphérique ainsi que la propagation au sein du réseau interne du réseau de service additionnel.

10. Réseau de service selon l'une ou plusieurs des revendications précédentes de réseau de service, dans lequel des moyens sont mis en oeuvre pour la protectoin contre des entrées erronées ou des attaques DoS, par la vérification de l'une ou plusieurs des règles suivantes :
a) permettre uniquement un seul préfixe sur une interface dédiée vers un réseau utilisateur final avec une longueur de préfixe configurable respectivement, de préférence 64 bits ;
b) le test de la possibilité d'agréger les adresses de source IP6 observées au sein d'un agrégat de préfixe complet devant être configuré avec une longueur inférieure à 64 bits ;
c) le test auprès du fournisseur d'accès internet via le fournisseur de service que l'adresse de source Ipv6 et le préfixe de l'utilisateur final IPv6 extrapolé correspondent avec un préfixe IPvB délégué des utilisateurs finaux correspondants.
